# EUROPÄISCHE PATENTANMELDUNG

(11) **EP 4 302 923 A1**
(43) Veröffentlichungstag der Anmeldung: **10.01.2024**
(21) Anmeldenummer: 23173818.8
(22) Anmeldetag: 17.05.2023
(51) Int. Cl.: B23Q 11/08

(54) **SCHUTZABDECKUNG FÜR EINE MASCHINE, INSBESONDERE MASCHINENSCHUTZABDECKUNG**

(30) Priorität: 19.05.2022 DE 202022102778 U; 27.05.2022 DE 202022102945 U
(71) Anmelder: MöllerWerke GmbH, 33649 Bielefeld (DE)
(72) Erfinder: REDEKER, Bernd, 33758 Schlosse Holte-Stukenbrock (DE); VOGT, Karsten, 33649 Bielefeld (DE); GUNTERMANN, Janik, 33647 Bielefeld (DE)
(74) Vertreter: Schober, Mirko

(57) **Zusammenfassung**

Eine Schutzabdeckung 1a-1c für eine Maschine umfasst eine Vielzahl an, insbesondere im Querschnitt jeweils L-förmigen, Abschirmelementen 2 sowie diese relativ zueinander beweglich miteinander verkettende Verbinder 3a-3c. An den Verbindern ist jeweils wenigstens ein Kopplungsmittel 4a, 4b ausgebildet. Die Abschirmelemente 2 weisen jeweils einen ersten Schenkel S1 und einen gegenüber ihrem ersten Schenkel S1 abgewinkelten zweiten Schenkel S2 auf. Die ersten Schenkel S1 jeweils zweier unmittelbar zueinander benachbarter Abschirmelemente 2 sind so mit ihren jeweiligen Deckflächen einander gegenüberliegend angeordnet, dass sich die zweiten Schenkel S2 der Abschirmelemente 2 zumindest teilweise unter Ausbildung einer längenveränderlichen Abschirmfläche F überdecken. Jeder Verbinder 3a-3c ist als jeweils separates Bauteil ausgebildet, von denen wenigstens ein Verbinder 3a-3c durch sein Kopplungsmittel 4a, 4b entweder mit mindestens einem anderen Verbinder 3a-3c oder mit mindestens einem der Abschirmelemente 2, insbesondere mit dessen erstem Schenkel S1, gekoppelt ist. Jeder Verbinder 3a-3c besitzt wenigstens zwei oder nur zwei bewegliche Arme 5a-5h; 5i, 5j, welche an einem diese miteinander verbindenden Mittelsteg 6a, 6b derart, insbesondere nebeneinander, angelenkt sind, dass die Arme 5a-5h; 5i, 5j eines Verbinders 3a-3c jeweils innerhalb einer eigenen Schwenkebene, insbesondere relativ zum Mittelsteg 6a, 6b, schwenkbar sind.

## Beschreibung

Die Erfindung betrifft eine Schutzabdeckung für eine Maschine, insbesondere Maschinenschutzabdeckung, mit den Merkmalen im Oberbegriff von Anspruch 1 und mit den Merkmalen im Oberbegriff von Anspruch 2.

Schutzabdeckungen der hier in Rede stehenden Art dienen dem Abschirmen und optischen Verdecken beweglicher Maschinenbauteile. Gegenüber Spänen, Schmierstoffen und/oder Kühlmitteln bilden sie eine bauliche Barriere, um Anforderungen in Bezug auf Sicherheit, Verschmutzung und Verschleiß erfüllen zu können. Je nach Einsatzzweck können diese aus einem Innensowie Außenfalten aufweisenden Faltenbalg bestehen oder einen daraus gebildeten längenveränderbaren Basiskörper umfassen. Ohne einen solchen Faltenbalg auskommende Ausführungsformen (faltenbalglos) weisen sich zumindest teilweise überdeckende und zumeist quer zu ihrer Längsrichtung relativ zueinander bewegliche Abschirmelemente auf. Bei den Abschirmelementen kann es sich beispielsweise um Lamellen aus Blech oder einem anderen geeigneten Material handeln. Verbundwerkstoffe aus wenigstens zwei voneinander unterschiedlichen Materialien sind ebenfalls möglich. Beim Einsatz eines Faltenbalgs kann dieser grundsätzlich eine Vielzahl an, insbesondere jeweils in einer seiner Innenfalten angeordneten, Stützelementen aufweisen, um die Stabilität des Faltenbalgs gegenüber unerwünschten Verformungen zu erhöhen.

Die eingesetzten Abschirmelemente weisen eine zumeist L-förmigen und insofern zwei gegeneinander abgewinkelte Schenkel umfassenden Querschnitt auf. Während die Deckseiten der jeweils ersten Schenkel der Abschirmelemente einander zugewandt sind, bilden die sich dabei zumindest teilweise überdeckenden zweiten Schenkel eine geschlossene Abschirmfläche aus. Deren Längenveränderlichkeit basiert auf den zumindest begrenzt variierbaren Abständen zwischen den ersten Schenkeln. Um die zur Beibehaltung der Abschirmfläche nötige Überdeckung der zweiten Schenkel sowie den Zusammenhalt der einzelnen Abschirmelemente zu gewährleisten, sind diese untereinander verkettet. Hierzu können deren sich jeweils unmittelbar gegenüberliegenden ersten Schenkel durch Verbinder beweglich untereinander gekoppelt sein. Bei diesen Verbindern kann es sich um Federelemente handeln, deren Federwiderstand entweder in oder gegen die Richtung der möglichen Annäherung der ersten Schenkel gerichtet ist. Im Ergebnis wird so entweder die Längung oder die Verkürzung der durch die zweiten Schenkel gebildeten Abschirmfläche durch die Verbinder zumindest unterstützt. Gleichzeitig können zumindest einige dieser Verbinder dazu ausgebildet sein, die Entfernung zweier unmittelbar benachbarter erster Schenkel der Abschirmelemente zu begrenzen, so dass die Abschirmfläche auch in der maximalen Auszugslänge der Schutzabdeckung stets in sich geschlossen bleibt.

Um eine möglichst kompakte Verkürzung der Schutzabdeckung zu erhalten, müssen deren Verbinder entsprechende Anforderungen erfüllen. Diese sollten eine größtmögliche Annäherung der über sie verbundenen ersten Schenkel der Abschirmelemente oder/und Stützelemente ermöglichen. Da die Verbinder in der Regel zwischen den ersten Schenkeln der Abschirmelemente angeordnet sind, ist daher deren möglichst flach bauende Ausgestaltung gewünscht. Mit Blick auf eine wirtschaftliche Herstellung sowie den schnellen Ein- und Ausbau defekter Verbinder sollten diese zudem eine möglichst einfache Ausgestaltung im Hinblick auf deren Befestigung aufweisen.

Aus DE 20 2006 006 412 U1 geht eine faltenbalglose Schutzabdeckung hervor, deren Abschirmelemente durch jeweils V-förmige oder als Parallelogramm ausgestaltete Verbinder miteinander gekoppelt sind. Jeder Verbinder umfasst hierzu zwei sich im Wesentlichen parallel zueinander erstreckende Verbindungsseiten, welche über mindestens einen Schenkel federnd miteinander verbunden sind. Die Verbindungsseiten jedes Verbinders dienen der Kopplung mit Führungsflächen, von jeweils zwei zueinander benachbarten Abschirmelementen. Eine dieser Verbindungsseiten kann als unbewegliche Halteseite oder eine demgegenüber verschiebliche Gleitseite ausgestaltet sein. Als Gleitseite ist diese in der Lage, die bei einer Längenänderung der Schutzabdeckung um die unbewegliche Halteseite herum erfolgende und eine relative Verschiebung der Abschirmelemente verursachende Drehbewegung so auszugleichen, dass die Abschirmelemente nur senkrecht zu ihrer Erstreckung verlagert werden.

EP 1 980 361 A zeigt ebenfalls eine Schutzabdeckung mit deren Abschirmelemente miteinander koppelnden Verbindern, welche entlang von Biegelinien schwenkbare Abschnitte aufweisen. Jeder dieser Verbinder besitzt zwei über einen Mittelteil verbundene Stege. An den sich gegenüberliegenden Enden jedes Stegs sind gegenüber diesem schwenkbare und über ihre freien Enden gelenkig miteinander verbundene Arme angeordnet. In jeder Ausführungsform der Verbinder dienen deren Stege der Kopplung mit den Abschirmelementen, während bei einer Längenänderung der Schutzabdeckung die Arme gegeneinander verschwenken und im vollständig gestauchten Zustand aufeinander zum Liegen kommen.

Aus DE 10 2014 110 571 A1 ist eine Schutzabdeckung bekannt, deren Verbinder jeweils zwei über eine Schwenkachse beweglich miteinander verbundene Arme aufweisen. Zur Montage greift jeweils ein Teil eines Verbinders durch eine Öffnung der ihm zugeordneten Abschirmelemente und wird dort eingerastet. Im vollständig gestauchten Zustand der Schutzabdeckung tauchen die Arme jedes Verbinders so weit in die Öffnungen der Abschirmelemente ein, bis sie zumindest teilweise aufeinander zum Liegen kommen.

EP 3 663 038 A1 beschreibt eine faltenbalglose Schutzabdeckung, deren Abschirmelemente durch Arme miteinander gekoppelt sind. Jeder dieser Arme ist ein materialeinheitlich einstückiger Teil des jeweiligen Abschirmelements, welcher durch Schnitt oder Stanzen vom restlichen Teil des Abschirmelements getrennt beweglich ist. Die so gebildeten Arme sind paarweise nebeneinander gelegen und in entgegengesetzte Richtungen zu jeweils einem der beiden benachbarten Abschirmelemente hin verschwenkt. Gemäß einer ersten Ausführungsform sind die paarweisen Arme eines zwischen einem ersten Abschirmelement und einem dritten Abschirmelement gelegenen zweiten Abschirmelement so ausgerichtet, dass einer der Arme mit dem ersten Abschirmelement gekoppelt ist, während der andere Arm mit dem dritten Abschirmelement gekoppelt ist. Alternativ können die paarweisen Arme eines Abschirmelements gemäß einer zweiten Ausführungsform auch jeweils mit einem der paarweise angeordneten Arme eines benachbarten Abschirmelements gelenkig gekoppelt sein. Auf diese Weise kommen die Arme im vollständig gestauchten Zustand der Schutzabdeckung aufeinander zum Liegen.

DE 20 2019 105 041 U1 offenbart eine Schutzabdeckung, die eine Vielzahl an jeweils einen ersten Schenkel und einen damit verbundenen zweiten Schenkel aufweisenden Abschirmelementen zeigt. Die ersten Schenkel der Abschirmelemente sind durch wenigstens eine längenveränderliche erste Verbindungsanordnung und eine längenveränderliche zweite Verbindungsanordnung beweglich miteinander gekoppelt. Die erste Verbindungsanordnung ist im Bereich einer, insbesondere dem zweiten Schenkel abgewandten, Außenkante des ersten Schenkels mit diesem verbindbar, während die zweite Verbindungsanordnung im Bereich einer, insbesondere eine Öffnung des ersten Schenkels begrenzenden, Innenkante des ersten Schenkels mit diesem verbindbar ist. Beide Verbindungsanordnungen weisen mindestens einen Materialstreifen auf, welcher unter Ausbildung von während einer Längenänderung der Schutzabdeckung gegeneinander schwenkbaren Abschnitten zickzackförmig gefaltet ist.

Aus DE 20 2019 105 044 U1 geht ein ähnlicher Aufbau einer Schutzabdeckung hervor, welcher allerdings nur eine im Bereich einer, insbesondere dem zweiten Schenkel abgewandten, Außenkante des ersten Schenkels mit diesem verbindbare Verbindungsanordnung zeigt. Auch diese Verbindungsanordnung weist einen Materialstreifen auf, welcher unter Ausbildung von während einer Längenänderung der Schutzabdeckung gegeneinander schwenkbaren Abschnitten zickzackförmig gefaltet ist.

Die bisher bekannten Ausführungsformen von Schutzabdeckungen weisen mitunter aufwendige Ausgestaltungen und Bauformen ihrer Verbinder auf. Im vollständig gestauchtem Zustand der jeweiligen Schutzabdeckung lassen diese bereits bauartbedingt nur begrenzt kompakte Abmessungen zu. Zur teilweisen Aufnahme der Verbinder dienende Ausnehmungen in den Abschirmelementen gestatten zwar ein kompakteres Baumaß, können allerdings zu einer unerwünschten Schwächung der einzelnen Bauteile führen.

Der vorliegenden Erfindung liegt daher die Aufgabe zugrunde, eine gattungsgemäße Schutzabdeckung dahingehend weiterzuentwickeln, dass diese eine möglichst wirtschaftliche Herstellungsweise bei gleichzeitig einfachem und vor allem kompaktem Aufbau ihrer Verbinder aufweist. Des Weiteren soll die Befestigung der Verbinder vereinfacht und die Verwendung separater Befestigungselemente (z.B. Niete) überflüssig gemacht werden. Dies soll auch die Möglichkeit schaffen, einzelne Abschirmelemente bei Bedarf einfach auswechseln zu können.

Diese Aufgabe wird durch eine erste Ausführungsform einer Schutzabdeckung mit den Merkmalen von Anspruch 1 gelöst. Eine weitere Lösung dieser Aufgabe findet sich in einer zweiten Ausführungsform einer Schutzabdeckung mit den Merkmalen von Anspruch 2. Vorteilhafte Ausgestaltungen sind Gegenstand der jeweils abhängigen Unteransprüche.

Nach der ersten Ausführungsform wird eine Schutzabdeckung vorgeschlagen, bei der jeder Verbinder zunächst als separates Bauteil ausgebildet ist. Wenigstens einer dieser Verbinder ist durch sein/e Kopplungsmittel entweder mit mindestens einem anderen Verbinder oder mit mindestens einem der Abschirmelemente gekoppelt. Die Kopplung mit einem Abschirmelement kann dabei bevorzugt mit dessen/deren ersten Schenkel/n erfolgen. Jeder Verbinder besitzt zudem wenigstens zwei oder nur zwei bewegliche Arme, welche an einem diese miteinander verbindenden Mittelsteg derart angelenkt sind, dass die Arme eines Verbinders jeweils innerhalb einer eigenen Schwenkebene, insbesondere relativ zum Mittelsteg, schwenkbar sind. Bevorzugt können die Arme dabei nebeneinander am Mittelsteg angelenkt sein.

Der sich hieraus ergebende Vorteil liegt - neben der wirtschaftlichen Herstellbarkeit und dem einfachen Aufbau der Verbinder - in einem überaus kompakten Zusammendrückmaß der Schutzabdeckung in deren vollständig gestauchten Zustand. Dies wird im Wesentlichen durch die Anordnung der Arme in voneinander unterschiedlichen Schwenkebenen erreicht, so dass die Arme nicht aufeinander zum Liegen kommen können. Durch den von den Schutzabdeckungen separierten Aufbau der einzelnen Verbinder ist bei Bedarf zudem deren einfacher und kostengünstiger Austausch möglich.

Gemäß einer zweiten Ausführungsform der erfindungsgemäßen Schutzabdeckung ist jeder Verbinder durch an diesem angeordnete Biegelinien in einzelne Abschnitte aufgeteilt. Die Biegelinien können dabei bevorzugt parallel zueinander verlaufen. In jedem Fall sind jeweils zwei unmittelbar aufeinanderfolgende Abschnitte eines Verbinders entlang der diese von-einander abgrenzenden Biegelinie gegeneinander schwenkbar. Dabei sind die Kopplungsmittel jedes Verbinders derart entweder jeweils zwischen zwei seiner Biegelinien oder jeweils im Bereich, insbesondere in Verlängerung, seiner Biegelinien gelegen, dass die Stützelemente oder Abschirmelemente jeweils mit einem Kopplungsmittel jedes Verbinders im Eingriff stehen.

Der sich hieraus ergebende Vorteil liegt vor allem in der wirtschaftlichen Herstellbarkeit der Schutzabdeckung und dem einfachen Aufbau ihrer Verbinder.

Insbesondere mit Bezug auf die erste Ausführungsform kann jeweils ein Kopplungsmittel bevorzugt an einem freien Endabschnitt jedes Arms eines Verbinders ausgebildet sein.

Alternativ oder ergänzend hierzu können mindestens zwei Abschirmelemente, insbesondere deren erste Schenkel, jeweils ein mit den Kopplungsmitteln wenigstens eines Verbinders korrespondierendes Kopplungsmittel besitzen. Deren Anordnung und Ausgestaltung erfolgt dabei derart, dass das Kopplungsmittel eines Arms des Verbinders zumindest bereichsweise mit dem Kopplungsmittel eines Abschirmelements im Eingriff steht, während das Kopplungsmittel eines anderen Arms desselben Verbinders mit dem Kopplungsmittel des unmittelbar zu diesem Abschirmelement benachbarten anderen Abschirmelement im Eingriff steht. Auf diese Weise sind jeweils zwei unmittelbar zueinander benachbarte Abschirmelemente direkt durch wenigstens einen Verbinder miteinander gekoppelt.

Weiterhin alternativ oder ergänzend hierzu können wenigstens ein Arm eines Verbinders und mindestens ein Arm eines anderen Verbinders über ihre Kopplungsmittel, insbesondere lösbar, miteinander verbunden sein. Hierdurch ergibt sich eine Kopplung zweier unmittelbar zueinander benachbarte Abschirmelemente durch mindestens zwei über ihre Kopplungsmittel mitein-ander im Eingriff stehende Verbinder.

Mit Bezug auf die Kopplungsmittel der Verbinder ist vorgesehen, dass das Kopplungsmittel wenigstens eines Verbinders zwei Einschnitte umfassen kann, von denen jeder Einschnitt sich dann unter Ausbildung einer zwischen diesen gelegenen Steckzone sowie eines endseitigen Steckabschnitts bis zu einer von zwei sich gegenüberliegenden Kanten den Einschnitt aufweisenden Arms erstreckt. Bevorzugt können die beiden Einschnitte dann in einer gemeinsamen Ebene an dem Arm gelegen sein. Die Ebene kann sich dabei in vorteilhafter Weise senkrecht zu wenigstens einer der sich gegenüberliegenden Kanten des Arms erstrecken.

Die Erfindung sieht vor, dass das Kopplungsmittel wenigstens eines Arms eines Verbinders und/oder wenigstens ein Kopplungsmittel eines Abschirmelements als Ausnehmung ausgebildet sein kann oder eine solche Ausnehmung aufweist. Bevorzugt kann die Ausnehmung dabei im Wesentlichen dreiecksförmig ausgestaltet sein.

Hierauf aufbauend kann dann an einem ersten Eckbereich und an einem zweiten Eckbereich der Ausnehmung jeweils eine Hinterschneidung ausgebildet sein. Diese können als beidseitige Verlängerung eines sich zwischen diesen beiden Eckbereichen erstreckenden Stützrandes der Ausnehmung ausgestaltet sein. In jedem Fall sind die Hinterschneidungen dazu ausgebildet, eine, insbesondere die, Steckzone eines Kopplungsmittels eines Arms eines Verbinders zumindest teilweise aufzunehmen.

Gemäß einer bevorzugten Weiterbildung des Erfindungsgedankens kann an einem dritten Eckbereich der, insbesondere dreiecksförmigen, Ausnehmung eine schlitzförmige Verlängerung der Ausnehmung ausgebildet sein. In vorteilhafter Weise kann die schlitzförmige Verlängerung sich dabei senkrecht zum Stützrand der Ausnehmung erstrecken. In jedem Fall ist die schlitzförmige Verlängerung derart ausgebildet und angeordnet, dass ein, insbesondere der, Steckabschnitt eines Kopplungsmittels eines Arms eines Verbinders durch einen Teil der Ausnehmung und deren schlitzförmige Verlängerung hindurch anordenbar ist. Durch eine 90°-Drehung dieses Arms ist dann jeweils ein Teil der Steckzone seines Kopplungsmittels zumindest bereichsweise in einer der beiden Hinterschneidungen angeordnet oder anordenbar.

Die Erfindung schlägt vor, dass wenigstens einer der Verbinder über seinen Mittelsteg mit einem Abschirmelement verbunden sein kann. Die Verbindung kann dabei bevorzugt mit dem ersten Schenkel des Abschirmelements bestehen. Dabei kann der Mittelsteg des Verbinders durch wenigstens ein separates Befestigungsmittel an dem Abschirmelement, insbesondere an dessen ersten Schenkel, befestigt sein.

Alternativ oder ergänzend kann an dem Mittelsteg eines, insbesondere des, Verbinders wenigstens eine Lasche angeordnet oder ausgebildet sein, wobei dann an wenigstens einem Abschirmelement, insbesondere an dessen ersten Schenkel, mindestens ein Befestigungsabschnitt angeordnet oder ausgebildet ist. Zur Befestigung des Verbinders an dem Abschirmelement umgreift die Lasche des Mittelstegs den Befestigungsabschnitt des Abschirmelements zumindest bereichsweise, während ein freier Endabschnitt der Lasche wenigstens teilweise innerhalb eines am Mittelsteg des Verbinders angeordneten oder ausgebildeten Steckschlitzes eingesteckt ist.

Die zuvor beschriebene Ausgestaltung kann bevorzugt dergestalt sein, dass der Befestigungsabschnitt des Abschirmelements zumindest bereichsweise zwischen wenigstens einem Teil der Lasche und einem im Bereich der Lasche gelegenen Teil des Verbinders eingegliedert ist. Alternativ oder ergänzend hierzu kann der freie Endabschnitt der Lasche des Verbinders einen Steckkopf mit wenigstens einer Hinterschneidung besitzen, welche dann im eingesteckten Zustand des Steckkopfes zumindest teilweise hinter einen den Steckschlitz des Verbinders begrenzenden Rand greift.

Bei dem benannten separaten Befestigungsmittel kann es sich bevorzugt um wenigstens eines der nachfolgend genannten handeln oder ein solches umfassen:
- Clip;
- Klammer;
- Klebstoff;
- Niet;
- Schraube;
- Spange.

Grundsätzlich kann wenigstens einer der Verbinder mehr als zwei Arme besitzen. So kann der Verbinder beispielsweise drei, vier, fünf, sechs, sieben oder bevorzugt acht Arme aufweisen. Je nach Ausgestaltung kann dieser selbstverständlich auch neun oder zehn oder noch mehr Arme besitzen.

Wenigstens zwei Arme eines Verbinders können in Bezug auf eine Auszugsrichtung der Schutzabdeckung derart relativ zueinander angeordnet sein, dass deren Schwenkebenen einen Winkel von 90° zwischen sich einschließen. Alternativ oder ergänzend hierzu können jeweils zwei, insbesondere parallele Schwenkebenen aufweisende, Arme eines Verbinders paarweise an dem Mittelsteg angeordnet sein.

Grundsätzlich und insbesondere mit Bezug auf die zweite Ausführungsform sieht die Erfindung vor, dass die Abschirmelemente der Schutzabdeckung jeweils einen ersten Schenkel und einen gegenüber ihrem ersten Schenkel abgewinkelten zweiten Schenkel aufweisen können. Von diesen sind die ersten Schenkel jeweils zweier unmittelbar zueinander benachbarter Abschirmelemente dann so mit ihren jeweiligen Deckflächen einander gegenüberliegend angeordnet, dass sich die zweiten Schenkel der Abschirmelemente zumindest teilweise unter Ausbildung einer längenveränderlichen Abschirmfläche überdecken.

Grundsätzlich und insbesondere mit Bezug auf die zweite Ausführungsform kann ein Faltenbalg für die Schutzabdeckung vorgesehen sein, welcher in Bezug auf eine Auszugsrichtung der Schutzabdeckung abwechselnd aufeinanderfolgende Innenfalten und Außenfalten aufweist. Die Stützelemente sind dann bevorzugt, insbesondere mit ihren jeweiligen Deckflächen einander gegenüberliegend, jeweils zumindest teilweise in einer Außenfalte angeordnet.

In vorteilhafter Weise können die jeweils über eines ihrer Kopplungsmittel mit demselben Stützelement oder demselben Abschirmelement im Eingriff stehenden Abschnitte der Verbinder im Bereich ihrer Kopplungsmittel an diesem Stützelement oder an diesem Abschirmelement zumindest begrenzt schwenkbar gelagert sein. Mit anderen Worten sind die Stützelement oder Abschirmelement durch die Kopplungsmittel eines Verbinders miteinander verkettet, während die Abschnitte der Verbinder während und in Abhängigkeit des Längenauszugs der Schutzabdeckung an den Stützelementen oder Abschirmelementen verschwenken.

Nach einer bevorzugten Weiterbildung kann jeder sich zwischen zwei Biegelinien erstreckende Abschnitt eines Verbinders über das im Bereich der einen Biegelinie gelegene Kopplungsmittel einerseits unverschieblich und über das im Bereich der anderen Biegelinie gelegene Kopplungsmittel andererseits linear verschieblich an zwei unmittelbar zueinander benachbarten Stützelementen oder Abschirmelementen gelagert sein.

Ergänzend hierzu können die in Bezug auf eine, insbesondere die, Auszugsrichtung der Schutzabdeckung unmittelbar aufeinanderfolgenden Stützelemente oder Abschirmelemente abwechselnd jeweils entweder mindestens eine Durchgangsöffnung oder mindestens ein Kopplungsmittel aufweisen. Die Abschnitte eines Verbinders stehen dann jeweils über das im Bereich der einen Biegelinie gelegene Kopplungsmittel unverschieblich mit dem Kopplungsmittel eines Stützelements oder eines Abschirmelements im Eingriff, während sie über das im Bereich der anderen Biegelinie gelegene Kopplungsmittel linear verschieblich mit der Durchgangsöffnung eines unmittelbar benachbarten Stützelements oder eines unmittelbar benachbarten Abschirmelements im Eingriff stehen.

Weiterhin ergänzend kann die Durchgangsöffnungen der Stützelemente oder der Abschirmelemente jeweils zwei diese begrenzende Führungsränder besitzen. Die Führungsränder können bevorzugt parallel zueinander verlaufen. In jedem Fall ist dann ein Kopplungsmittel eines Verbinders zumindest abschnittsweise entlang dieser Führungsränder linear verschieblich geführt.

Grundsätzlich ist vorgesehen, dass das Kopplungsmittel wenigstens eines Stützelements oder eines Abschirmelements als, insbesondere dreiecksförmige, Ausnehmung ausgebildet sein kann oder eine, insbesondere dreiecksförmige, Ausnehmung aufweisen kann. Bei einer bevorzugt dreiecksförmigen Ausgestaltung der Ausnehmung kann an einem ersten Eckbereich und an einem zweiten Eckbereich dieser Ausnehmung jeweils eine Hinterschneidung ausgebildet sein. Diese können als beidseitige Verlängerung eines sich zwischen diesen beiden Eckbereichen erstreckenden Stützrandes der Ausnehmung ausgestaltet sein. In jedem Fall sind die Hinterschneidungen zur teilweisen Aufnahme einer Steckzone eines Kopplungsmittels eines Verbinders ausgebildet.

Gemäß einer bevorzugten Weiterentwicklung kann an einem dritten Eckbereich der Ausnehmung eine, insbesondere sich senkrecht zum Stützrand erstreckende, schlitzförmige Verlängerung der dreiecksförmigen Ausnehmung ausgebildet sein. Diese ist dann derart gelegen und ausgestaltet, dass die Steckzone eines Kopplungsmittels eines Verbinders durch einen Teil der Ausnehmung und deren schlitzförmige Verlängerung hindurch anordenbar ist. Durch eine zumindest abschnittsweise 90°-Drehung dieses Verbinders ist so jeweils ein Teil der Steckzone seines Kopplungsmittels zumindest bereichsweise in einer der beiden Hinterschneidungen angeordnet oder anordenbar.

Es ist vorgesehen, dass das Kopplungsmittel wenigstens eines Verbinders zwei, insbesondere in einer gemeinsamen Ebene gelegene, Einschnitte umfassen kann. Dabei erstreckt sich jeder dieser Einschnitte unter Ausbildung einer zwischen diesen gelegenen Steckzone bis zu einer von zwei sich gegenüberliegenden Rändern des Verbinders.

An wenigstens einem Kopplungsmittel eines Stützelements oder eines Abschirmelements kann ein mit dem Querschnitt eines Verbinders korrespondierender Öffnungsschlitz gelegen sein. Der Öffnungsschlitz ist durch zwei an jeweils einer seiner beiden Längskanten ausgebildete und zueinander versetzt angeordneten dreiecksförmige Einkerbungen teilweise verbreitert. Diese Verbreiterung ist derart gelegen und ausgestaltet, dass eine, insbesondere die, Steckzone eines Kopplungsmittels eines Verbinders durch den Öffnungsschlitz hindurch anordenbar ist. Durch eine wenigstens abschnittsweise Drehung von 45° bis 90°, insbesondere 45°, dieses Verbinders ist dann jeweils ein Teil der Steckzone seines Kopplungsmittels zumindest bereichsweise in einer der beiden dreiecksförmige Einkerbungen angeordnet oder anordenbar. In diesem Zusammenhang greift dann wenigstens eine durch, insbesondere die, Einschnitte eines Kopplungsmittels dieses Verbinders gebildete Hinterschneidung zumindest teilweise hinter einen eine dreiecksförmige Einkerbung des Kopplungsmittels des Stützelements oder des Abschirmelements begrenzenden Rand.

Es ist vorgesehen, dass mindestens ein endseitiger Abschnitt wenigstens eines Verbinders eine Befestigungsöffnung aufweisen kann. Dieser endseitige Abschnitt kann gegenüber einem unmittelbar benachbarten Abschnitt schmaler ausgestaltet sein.

Grundsätzlich sieht die Erfindung vor, dass die Lamellen oder die Abschirmelemente der Schutzabdeckung aus einem Metall gebildet sind oder/und dass die Verbinder aus einem der nachfolgend genannten Kunststoffe gebildet sind oder einen solchen aufweisen können:
- Polyamid;
- Polypropylen;
- Polypropylen-Copolymer;
- Polyethylen.

Mit Bezug auf die Stützelemente können diese in vorteilhafter Weise grundsätzlich aus einem Kunststoff, insbesondere PVC, gebildet sein oder einen solchen aufweisen.

Die nunmehr vorgestellte erfindungsgemäße Schutzabdeckung ermöglicht eine überaus wirtschaftliche Herstellungsweise bei gleichzeitig einfachem Aufbau ihrer Verbinder. Die an sich einfache und bevorzugt identische Ausgestaltung der einzelnen Verbinder lässt geringe Stückkosten zu. Die bevorzugt werkzeuglose Anbindung der Verbinder an die Abschirmelemente durch einfache Verbindungsmittel unterstützt die insgesamt einfache und schnelle Fertigung einer solchen Schutzabdeckung und nachträglich auch den schnellen Austausch eines beispielsweise defekten Verbinders oder eines defekten Abschirm-elements.

Die Erfindung wird nachfolgend anhand der Figuren 1-15 näher erläutert. Gezeigt wird in:
- Fig. 1: eine erste Ausführungsform einer erfindungsgemäßen Schutzabdeckung in einer perspektivischen Darstellungsweise,
- Fig. 2: ein einzelner Verbinder der Schutzabdeckung aus Fig. 1 in perspektivischer Darstellungsweise,
- Fig. 3: ein Detailausschnitt der Schutzabdeckung aus Fig. 1 und Fig. 2 in einer veränderten Perspektive,
- Fig. 4: eine erste Variante der Schutzabdeckung aus Fig. 1 bis Fig. 3 in ansonsten gleicher Darstellungsweise,
- Fig. 5: eine zweite Variante der Schutzabdeckung aus Fig. 1 bis Fig. 4 in ansonsten gleicher Darstellungsweise,
- Fig. 6: ein einzelner Verbinder der Schutzabdeckung aus Fig. 5 in perspektivischer Darstellungsweise,
- Fig. 7: eine Detailansicht einiger Bauteile der Schutzabdeckung aus Fig. 5 in einer veränderten Perspektive,
- Fig. 8: eine zweite Ausführungsform einer erfindungsgemäßen Schutzabdeckung in einer perspektivischen Darstellungsweise,
- Fig. 9: eine Detailansicht einiger Bauteile der Schutzabdeckung aus Fig. 8 in einer veränderten Perspektive,
- Fig. 10: eine erste Variante der Schutzabdeckung aus Fig. 8 und Fig. 9 in ansonsten gleicher Darstellungsweise sowie
- Fig. 11: eine zweite Variante der Schutzabdeckung aus Fig. 8 bis Fig. 10 in ansonsten gleicher Darstellungsweise.Fig. 12 ein Abschnitt eines einzelnen Bauteils der Schutzabdeckung aus Fig. 10 und 11 in einer Draufsicht,
- Fig. 12: ein Abschnitt eines einzelnen Bauteils der Schutzabdeckung aus Fig. 10 und 11 in einer Draufsicht,
- Fig. 13: das Bauteil aus Fig. 12 in einer perspektivischen Darstellungsweise,
- Fig. 14: eine Detailansicht eines Bauteils der Schutzabdeckung aus Fig. 10 und Fig. 11 in einer abschnittsweisen Draufsicht sowie
- Fig. 15: eine Detailansicht eines weiteren Bauteils der Schutzabdeckung aus Fig. 10 und Fig. 11 in einer abschnittsweisen Draufsicht.

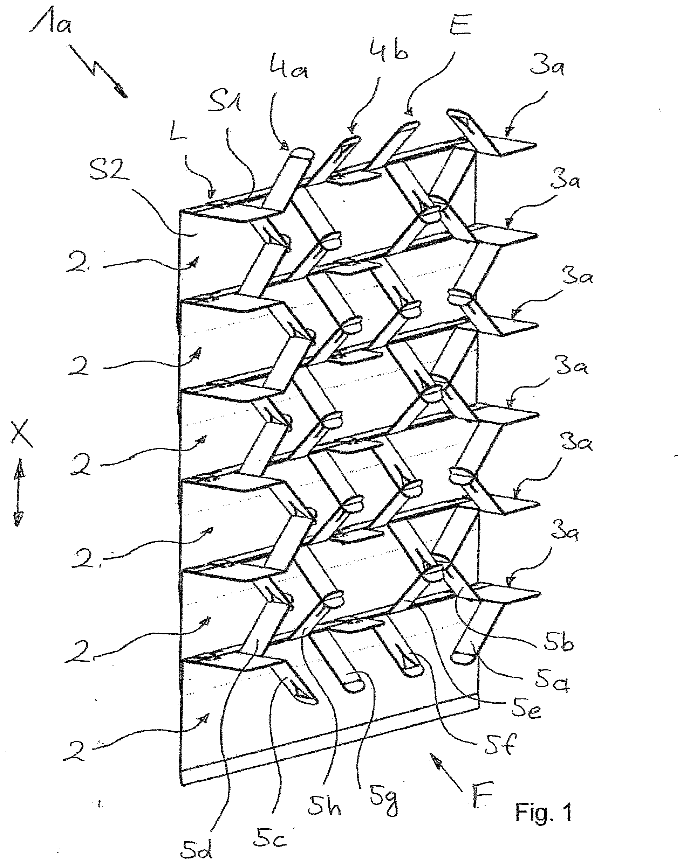

Fig. 1 zeigt eine erste Ausführungsform einer erfindungsgemäßen Schutzabdeckung 1a in einer perspektivischen Darstellungsweise. Diese ist nur als beispielhaft zu verstehen und kann selbstverständlich hiervon abweichende Abmessungen aufweisen, ohne den Bereich der Erfindung zu verlassen. Die Schutzabdeckung 1 umfasst eine Vielzahl sich senkrecht zu einer Auszugsrichtung X erstreckender Abschirmelemente 2.

Die einzelnen Abschirmelemente 2 weisen jeweils einen L-förmigen Querschnitt auf, so dass jedes dieser Abschirmelemente 2 einen ersten Schenkel S1 und einen gegenüber dem ersten Schenkel S1 abgewinkelten zweiten Schenkel S2 besitzt. Dabei liegen die Deckflächen der ersten Schenkel S1 jeweils zweier unmittelbar zueinander benachbarter Abschirmelemente 2 so ein-ander gegenüber, dass sich deren zweite Schenkel S2 zumindest teilweise unter Ausbildung einer in Bezug auf die Auszugsrichtung X längenveränderliche Abschirmfläche F überdecken.

Die einzelnen Abschirmelemente 2 sind durch separate Bauteile in Form von Verbindern 3a relativ zueinander beweglich mit-einander verkettet. In dem hier gezeigten Ausführungsbeispiel ist hierzu jeder Verbinder 3a mit den ersten Schenkeln S1 des ihm zugehörigen Abschirmelement 2 verbunden. Jeder dieser Verbinder 3a besitzt vorliegend rein beispielhaft insgesamt acht bewegliche Arme 5a-5h, an deren jeweiligem freien Endabschnitt E ein Kopplungsmittel 4a, 4b ausgebildet ist. Erkennbar sind die Kopplungsmittel 4a, 4b dabei unterschiedlich und miteinander korrespondierend gestaltet, so dass eine erste Hälfte der Arme 5a, 5c, 5f, 5g eines ersten Verbinders 3a mit einer Hälfte der Arme 5b, 5d, 5h, 5e eines unmittelbar benachbarten zweiten Verbinders 3a über ihre Kopplungsmittel 4a, 4b lösbar miteinander verbunden sind, während eine zweite Hälfte der Arme 5b, 5d, 5h, 5e des ersten Verbinders 3a mit einer Hälfte der Arme 5a, 5c, 5f, 5g eines unmittelbar benachbarten dritten Verbinders 3a über ihre Kopplungsmittel 4a, 4b lösbar miteinander verbunden sind.

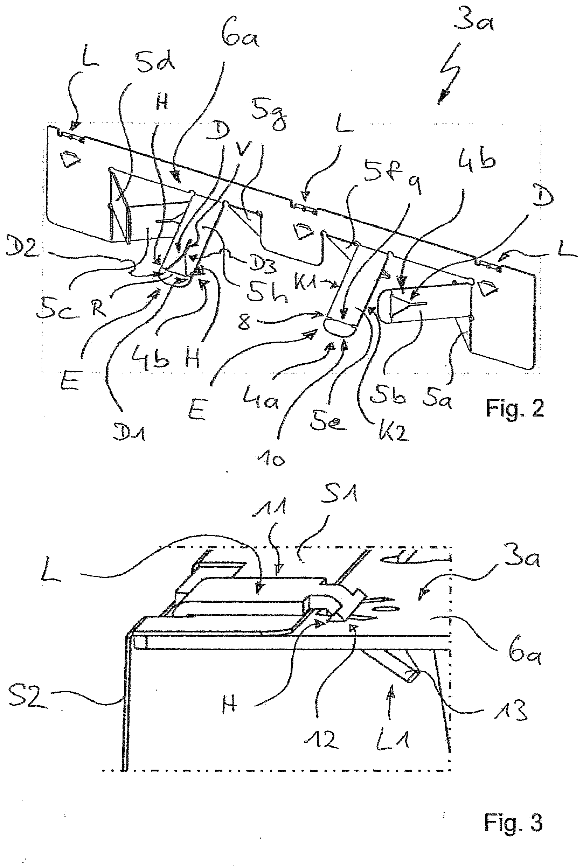

Fig. 2 zeigt einen der baugleichen Verbinder 3a aus Fig. 1 in einer von der übrigen Schutzabdeckung 1 isolierten perspektivischen Darstellungsweise. Wie zu erkennen, weist der hier stellvertretend für die anderen Verbinder 3a in Fig. 1 ersichtliche Verbinder 3a einen Mittelsteg 6a auf, an dem die insgesamt acht Arme 5a-5h jeweils paarweise nebeneinander und relativ zu diesem schwenkbar angelenkt sind. Die jeweils zu zweit angeordneten Arme 5a, 5b; 5c, 5d; 5e, 5f; 5g, 5h weisen pro Paar parallele Schwenkebenen auf. Die paarweise angeordneten Arme 5a, 5b; 5c, 5d; 5e, 5f; 5g, 5h mit jeweils parallelen Schwenkebenen sind in Bezug auf die Auszugsrichtung X der Schutzabdeckung 1a so relativ zueinander angeordnet, dass die zueinander parallelen Schwenkebenen eines Paares an Armen 5a, 5b; 5c, 5d; und die zueinander parallelen Schwenkebenen eines benachbarten Paares an Armen 5e, 5f; 5g, 5h einen Winkel von 90° zwischen sich einschlie-ßen.

Der Mittelsteg 6a weist im Wesentlichen eine C- oder U-Form auf, welche zwei Schenkel und eine die Schenkel miteinander verbindende Basis besitzt. Jeweils ein Paar aus zwei Armen 5a, 5b; 5c, 5dist an den beiden Schenkeln des Mittelstegs 6a angeordnet, während die übrigen vier Arme 5e, 5f; 5g, 5h ebenfalls jeweils paarweise in einem Abstand zueinander an der Basis des Mittelstegs 6a gelegen sind.

Mit Blick auf die Arme 5a-5h wird deutlich, dass die Hälfte dieser Arme 5a, 5d, 5e, 5g eine Ausgestaltung ihrer jeweiligen Kopplungsmittel 4a aufweist, welche zwei Einschnitte 8 umfasst, von denen jeder Einschnitt 8 sich - unter Ausbildung einer zwischen diesen gelegenen Steckzone 9 sowie eines endseitigen Steckabschnitts 10 - bis zu einer von zwei sich gegenüberliegenden Kanten K1, K2 dieser Arme 5a, 5d, 5e, 5g erstreckt. Die Einschnitte 8 sind dabei in einer gemeinsamen Ebene gelegen, welche sich senkrecht zu den Kanten K1, K2 erstreckt. Die andere Hälfte der Arme 5b, 5c, 5f, 5h weist demgegenüber eine Ausgestaltung ihrer jeweiligen Kopplungsmittel 4a auf, welche als im Wesentlichen dreiecksförmige Ausnehmung D bezeichnet werden kann.

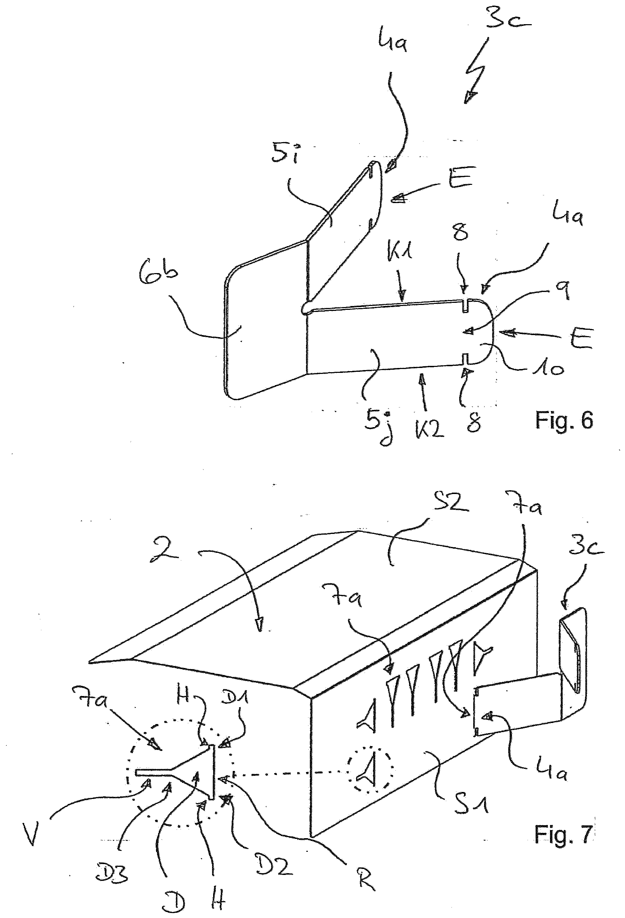

Fig. 7 zeigt eine solche Ausnehmung D im Detail, welche dort nur nicht an einem Arm 5b, 5c, 5f, 5h, sondern an dem ersten Schenkel S1 eines Abschirmelements 2 angeordnet ist. Unabhängig davon weisen die Ausnehmungen D die gleiche Ausgestaltung auf, so dass diese anhand der Fig. 7 beispielhaft erläutert werden kann:
So ist an einem ersten Eckbereich D1 und an einem zweiten Eckbereich D2 der Ausnehmung D jeweils eine Hinterschneidung H ausgebildet. Diese Hinterschneidungen H stellen eine Art beidseitige Verlängerung eines sich zwischen diesen beiden Eckbereichen D1, D2 erstreckenden Stützrandes R der Ausnehmung D dar. Dabei sind die Hinterschneidungen H zur teilweisen Aufnahme der Steckzone 9 des Kopplungsmittels 4a eines Arms 5a, 5d, 5e, 5g des Verbinders 3a ausgebildet, wie insbesondere in Fig. 1 ersichtlich. Weiterhin ist an einem dritten Eckbereich D3 der Ausnehmung D eine sich senkrecht zum Stützrand R erstreckende, schlitzförmige Verlängerung V der Ausnehmung D ausgebildet. Durch diese Form der Ausnehmung D ist es möglich, den Steckabschnitt 10 des Kopplungsmittels 4a eines Arms 5a, 5d, 5e, 5g eines Verbinders 3a durch einen Teil der Ausnehmung D und deren schlitzförmige Verlängerung V hindurch anzuordnen, wobei durch eine anschließende 90°-Drehung dieses Arms 5a, 5d, 5e, 5g jeweils ein Teil der Steckzone 9 des Kopplungsmittels 4a zumindest bereichsweise in einer der beiden Hinterschneidungen H anordenbar ist.

Fig. 1 verdeutlicht weiterhin, dass die Verbinder 3a jeweils über ihren Mittelsteg 6a mit dem ersten Schenkel S1 des ihnen zugehörigen Abschirmelements 2 verbunden sind. Die hier gezeigte Verbindung kommt ohne zusätzliche Bauteile aus und ist bevorzugt werkzeuglos zu realisieren. Hierzu ist an dem jeweiligen Mittelsteg 6a eines Verbinders 3a wenigstens eine Lasche L angeordnet, wie insbesondere in Fig. 3 verdeutlicht. Demgegenüber ist an dem ersten Schenkel S1 des dem Verbinder 3a zugehörigen Abschirmelements 2 mindestens ein Befestigungsabschnitt 11 angeordnet. Erkennbar weisen der erste und/oder zweite Schenkel S1, S2 des Abschirmelements 2 hierzu eine Öffnung auf, durch welche hindurch die lasche L anordenbar ist. Zur Befestigung des Verbinders 3a an dem Abschirmelement 2 umgreift die Lasche L den Befestigungsabschnitt 11 des Abschirmelements 2 zumindest bereichsweise, während ein freier Endabschnitt L1 der Lasche L wenigstens teilweise innerhalb eines am Mittelsteg 6a des Verbinders 3a angeordneten Steckschlitzes 12 eingesteckt ist. Ersichtlich ist der Befestigungsabschnitt 11 des Abschirmelements 2 dabei zumindest bereichsweise zwischen wenigstens einem Teil der Lasche L und einem im Bereich der Lasche L gelegenen Teil des Verbinders 3a eingegliedert. Der freie Endabschnitt L1 der Lasche L des Verbinders 3a besitzt einen Steckkopf 13 mit wenigstens einer Hinterschneidung H, welche zumindest teilweise hinter einen den Steckschlitz 12 des Verbinders 3a begrenzenden Rand greift.

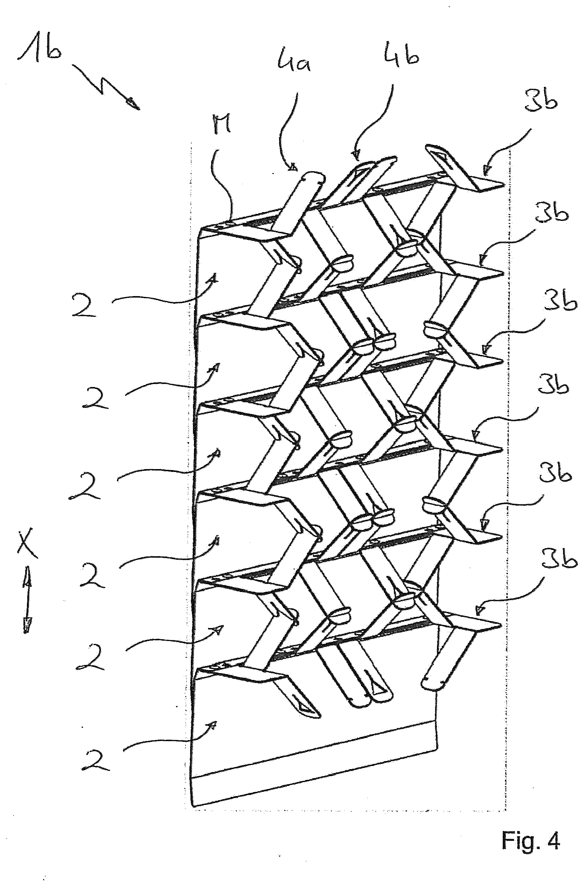

Fig. 4 ist eine erste Variante in Bezug auf die zuvor näher beschriebene Befestigung der Verbinder 3a an den Abschirmelementen 2 zu entnehmen. Die Verbinder 3b der hier gezeigten Schutzabdeckung 1b sind so gestaltet, dass diese keine Laschen L besitzen. Vielmehr ist deren jeweiliger Mittelsteg 6a durch mehrere separate Befestigungsmittel M am ersten Schenkel S1 des jeweils zugehörigen Abschirmelements 2 befestigt. Bei dem separaten Befestigungsmittel M kann es sich beispielsweise um einen Clip oder eine Klammer oder Klebstoff oder einen Niet oder eine Schraube oder eine Spange handeln. Alternativ hierzu kann das separate Befestigungsmittel M auch wenigstens eine der vorgenannten Ausführungsformen umfassen.

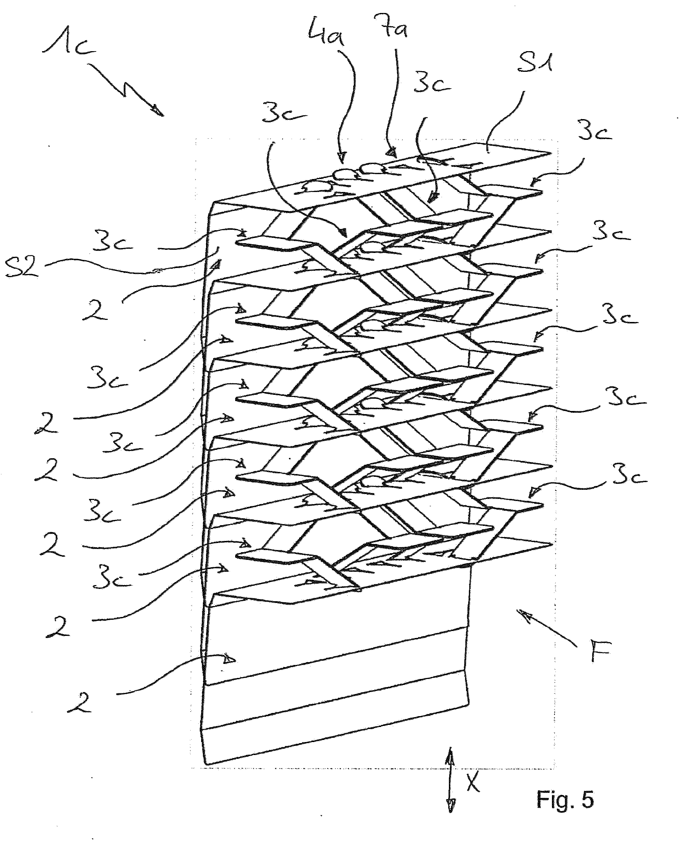

Fig. 5 ist eine zweite Variante zu den in Fig. 1 bis Fig. 4 gezeigten Ausgestaltungen in Form einer weiteren Schutzabdeckung 1c zu entnehmen. Während in den vorherigen Ausführungsformen jeder Verbinder 3a, 3b durch seine an den Armen 5a-5h gelegenen unterschiedlichen Kopplungsmittel 4a, 4b mit zwei weiteren Verbindern 3a, 3b gekoppelt ist, wird nunmehr jeder Verbinder 3c vorliegend mit den ersten Schenkeln S1 zweier Abschirmelemente 2 gekoppelt. Hierzu besitzen die ersten Schenkel S1 der Abschirmelemente 2 jeweils ein mit den Kopplungsmitteln 4a der Verbinder 3c korrespondierende Kopplungsmittel 7a. Diese sind wie bereits zuvor zu Fig. 7 erläutert ausgestaltet und in Fig. 7 näher ersichtlich. Hierdurch ist es möglich, dass das Kopplungsmittel 4a eines Arms 5i, 5j des Verbinders 3c zumindest bereichsweise mit dem Kopplungsmittel 7a eines Abschirmelements 2 im Eingriff steht, während das Kopplungsmittel 4a eines anderen Arms 5i, 5j desselben Verbinders 3c mit dem Kopplungsmittel 7a des unmittelbar zu diesem Abschirmelement 2 benachbarten anderen Abschirmelement 2 im Eingriff steht.

Fig. 6 ist ein einzelner dieser Verbinder 3c zu entnehmen. Erkennbar weist dieser genau zwei über einen Mittelsteg 6b verbundene Arme 5i, 5j auf, welche nebeneinander und in zueinander parallelen Schwenkebenen an dem Mittelsteg 6b schwenkbar angeordnet sind.

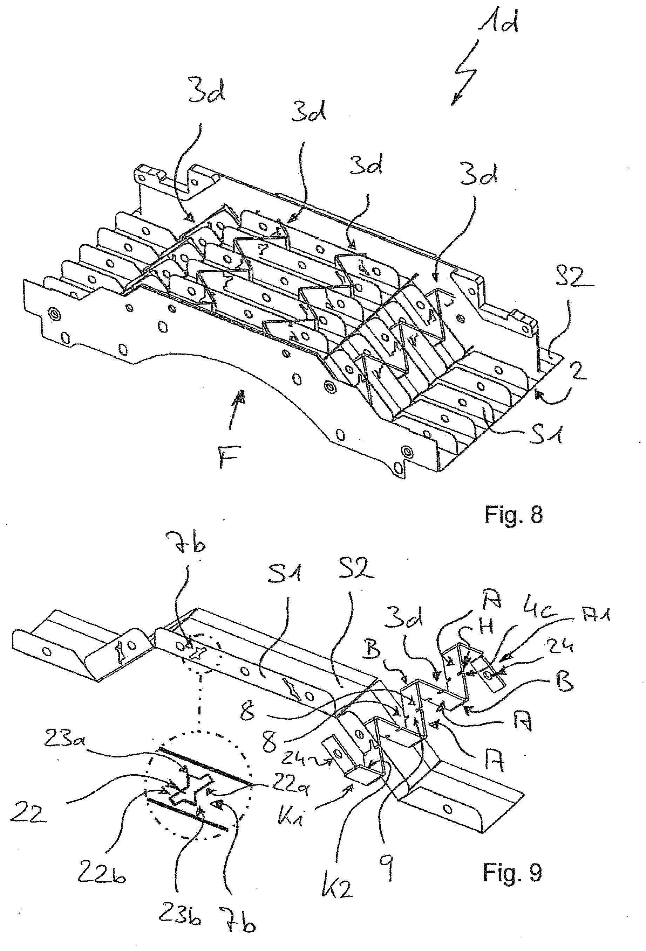

Fig. 8 verdeutlicht den Aufbau einer zweiten Ausführungsform einer erfindungsgemäßen Schutzabdeckung 1d. Diese weist ebenfalls eine Vielzahl an im Querschnitt jeweils L-förmigen Abschirmelementen 2 auf, welche durch diese relativ zueinander beweglich miteinander verkettende Verbinder 3d miteinander gekoppelt sind. Im Unterschied zu den zuvor erläuterten Ausgestaltungen der Verbinder 3a-3c erstrecken sich die hier gezeigten Verbinder 3d jeweils parallel zur Auszugsrichtung X über die gesamten Abschirmelemente 2 hinweg. Mit anderen Worten setzt sich jede in Bezug auf die Auszugsrichtung X erstreckende Kette nicht aus einzelnen Verbindern 3a-3c zusammen, sondern wird durch einen zusammenhängenden Verbinder 3d gebildet. Dabei ist jeder dieser Verbinder 3d durch an diesem parallel zueinander angeordnete Biegelinien B in einzelne Abschnitte A aufgeteilt, von denen jeweils zwei unmittelbar aufeinanderfolgende Abschnitte A entlang der diese voneinander abgrenzenden Biegelinie B gegeneinander schwenkbar sind. Auf diese Weise ergibt sich zumindest im nicht vollständig expandierten Zustand der Schutzabdeckung 1d quasi eine Zickzackform jedes Verbinders 3d.

Fig. 9 zeigt aus Gründen der besseren Übersicht nur ein Abschirmelement 2 nebst einem Verbinder 3d der Schutzabdeckung 1d aus Fig. 8. Dadurch wird deutlich, dass die Kopplungsmittel 4c jedes Verbinders 3d jeweils zwischen zwei seiner Biegelinien B gelegen sind. Die Abschirmelemente 2 stehen jeweils mit einem der Kopplungsmittel 4c jedes Verbinders 3d im Eingriff. Die Kopplungsmittel 4c jedes Verbinders 3d umfassen jeweils zwei Einschnitte 8, von denen jeder Einschnitt 8 sich unter Ausbildung einer zwischen diesen gelegenen Steckzone 9 bis zu einer von zwei sich gegenüberliegenden Rändern K1, K2 des Verbinders 3d erstreckt. Die Abschirmelemente 2 weisen mit den Kopplungsmitteln 4c der Verbinder 3d korrespondierende Kopplungsmittel 7b auf, welche vorliegend an den ersten Schenkeln S1 der Abschirmelemente 2 ausgebildet sind. Die Kopplungsmittel 7b der Abschirmelemente 2 weisen jeweils einen mit dem Querschnitt der Verbinder 3d korrespondierenden Öffnungsschlitz 22 auf, welcher durch zwei an jeweils einer seiner beiden Längskanten 22a, 22b ausgebildete und zueinander versetzt angeordnete, dreiecksförmige Einkerbungen 23a, 23b teilweise verbreitert ist. Hierdurch ist die Steckzone 9 eines Kopplungsmittels 4c eines Verbinders 3d durch den Öffnungsschlitz 22 hindurch anordenbar. Durch eine wenigstens abschnittsweise Drehung von 45° bis 90°, insbesondere 45°, dieses Verbinders 3d ist jeweils ein Teil der Steckzone 9 seines Kopplungsmittels 4c zumindest bereichsweise in einer der beiden dreiecksförmige Einkerbungen 23a, 23b angeordnet, während wenigstens eine durch die Einschnitte 8 eines Kopplungsmittels 4c dieses Verbinders 3d gebildete Hinterschneidung H zumindest teilweise hinter einen eine dreiecksförmige Einkerbung 23a, 23b des Kopplungsmittels 7b des Abschirmelements 2 begrenzenden Rand greift.

Im Ergebnis sind die jeweils über eines ihrer Kopplungsmittel 4c mit demselben Abschirmelement 2, insbesondere mit dessen Kopplungsmitteln 7b, im Eingriff stehenden Abschnitte A der Verbinder 3d im Bereich ihrer Kopplungsmittel 4c an diesem Abschirmelement 2 begrenzt schwenkbar gelagert. Ein endseitiger Abschnitt A1 wenigstens eines Verbinders 3d kann eine Befestigungsöffnung 24 aufweisen. Der endseitige Abschnitt A1 kann gegenüber einem unmittelbar benachbarten Abschnitt A des Verbinders 3d schmaler ausgestaltet sein.

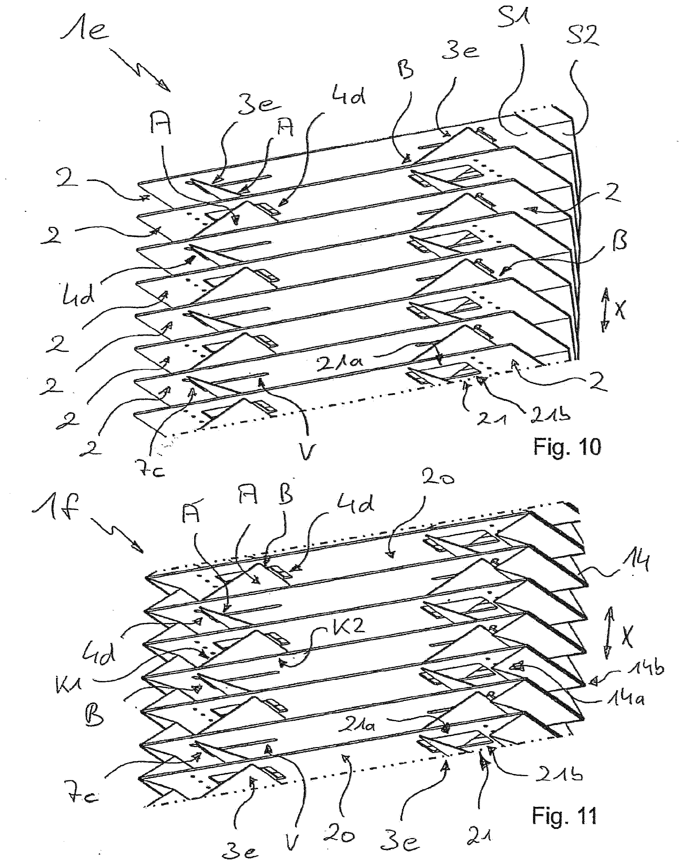

Fig. 10 ist eine erste Variante der zweiten Ausführungsform der erfindungsgemäßen Schutzabdeckung 1d aus Fig. 8 und Fig. 9 zu entnehmen. Die hier ersichtliche Schutzabdeckung 1e unterscheidet sich insofern, als dass die mit den Abschirmelementen 2 im Eingriff stehenden Kopplungsmittel 4d der Verbinder 3e jeweils im Bereich, insbesondere in Verlängerung, der Biegelinien B gelegen sind. Weiterhin weisen die in Bezug auf die Auszugsrichtung X der Schutzabdeckung 1e unmittelbar aufeinanderfolgenden Abschirmelemente 2 abwechselnd jeweils entweder mindestens eine Durchgangsöffnung 21 oder mindestens ein Kopplungsmittel 7c auf. Jeder sich zwischen zwei Biegelinien B erstreckende Abschnitt A eines Verbinders 3e ist über das im Bereich der einen Biegelinie B gelegene Kopplungsmittel 4d unverschieblich und über das im Bereich der anderen Biegelinie B gelegene Kopplungsmittel 4d linear verschieblich an zwei unmittelbar zueinander benachbarten Abschirmelementen 2 gelagert. Dabei stehen die einzelnen Abschnitte A eines Verbinders 3e jeweils über das im Bereich der einen Biegelinie B gelegene Kopplungsmittel 4d unverschieblich mit dem Kopplungsmittel 7c eines Abschirmelements 2 im Eingriff, während sie über das im Bereich der anderen Biegelinie B gelegene Kopplungsmittel 4d linear verschieblich mit der Durchgangsöffnung 21 eines unmittelbar benachbarten Abschirmelements 2 im Eingriff sind. Die Durchgangsöffnungen 21 der Abschirmelemente 2 besitzen jeweils zwei diese begrenzende, insbesondere parallel zueinander verlaufende, Führungsränder 21a, 21b, entlang denen ein Kopplungsmittel 4d eines Verbinders 3e zumindest abschnittsweise linear verschieblich geführt ist.

Fig. 11 ist eine zweite Variante der zweiten Ausführungsform der erfindungsgemäßen Schutzabdeckung 1d Schutzabdeckung aus Fig. 8 und Fig. 9 zu entnehmen. Die hier ersichtliche Schutzabdeckung 1f entspricht im Wesentlichen der zuvor mit Bezug auf Fig. 10 diskutierten Ausgestaltung, so dass das zuvor Gesagte zunächst auch auf diese Ausführungsform anwendbar ist. Bei genauerer Betrachtung wird deutlich, dass die hier gezeigte Schutzabdeckung 1f keine Abschirmelemente 2, sondern einen Faltenbalg 14 besitzt, welcher in Bezug auf die Auszugsrichtung X der Schutzabdeckung 1a-1f abwechselnd aufeinanderfolgende Innenfalten 14a und Außenfalten 14b aufweist. Weiterhin sind Stützelemente 20 vorgesehen, welche insbesondere mit ihren jeweiligen Deckflächen einander gegenüberliegend jeweils zumindest teilweise in einer Außenfalte 14b des Faltenbalgs 14 angeordnet sind.

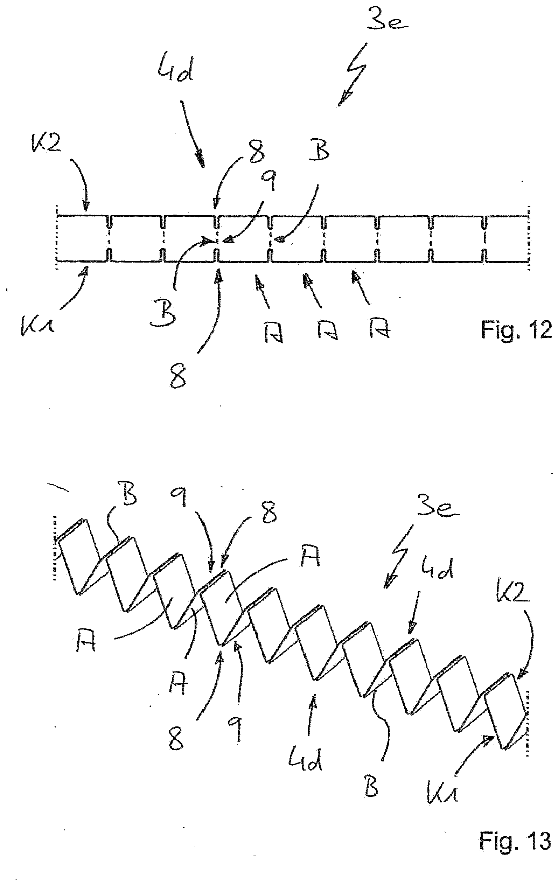

Fig. 12 zeigt einen Abschnitt des Verbinders 3e der Schutzabdeckungen 1e, 1f aus Fig. 10 und Fig. 11 in einer von den übrigen Bauteilen separaten Darstellung seiner Draufsicht. Wie zu erkennen, ist der Verbinder 3e hierzu in seine maximal mögliche Länge gestreckt, so dass sich dessen einzelnen aufeinanderfolgenden Abschnitte A in derselben Ebene erstrecken. Wie bereits zuvor erläutert und in der isolierten Darstellung des Verbinders 3e gut zu erkennen, sind die zum Eingriff mit den Abschirmelementen 2 vorgesehenen Kopplungsmittel 4d der Verbinder 3e jeweils im Bereich, insbesondere in Verlängerung, der hier durch unterbrochene Linien angedeuteten Biegelinien B gelegen. Die einzelnen Abschnitte A des Verbinders 3e erstrecken sich jeweils zwischen zwei dieser Biegelinien B. Jedes Kopplungsmittel 4d des Verbinders 3e umfasst zwei in einer gemeinsamen Ebene gelegene Einschnitte 8, von denen jeder Einschnitt 8 sich unter Ausbildung einer zwischen diesen gelegenen Steckzone 9 bis zu einer von zwei sich gegenüberliegenden Rändern K1, K2 des Verbinders 3e erstreckt. Die Unverschieblichkeit sowie die lineare Verschieblichkeit der insgesamt gleich ausgebildeten Kopplungsmittel 4d ergibt sich einzig daraus, ob diese mit einer Durchgangsöffnung 21 (verschieblich) oder mit einem Kopplungsmittel 7c (unverschieblich) der Abschirmelemente 2 in Eingriff gelangen.

Fig. 13 ist nochmals der von den übrigen Bauteilen der Schutzabdeckung 1e, 1f isolierte Verbinder 3e aus Fig. 12 zu entnehmen, welcher vorliegend seine im eingebauten Zustand typische zickzackförmige Gestalt im nicht vollständig gestreckten Zustand zeigt. Dies meint, dass die einzelnen aufeinanderfolgenden Abschnitte A entlang der Biegelinien B abwechselnd in voneinander unterschiedliche Richtungen gegeneinander verschwenkt sind.

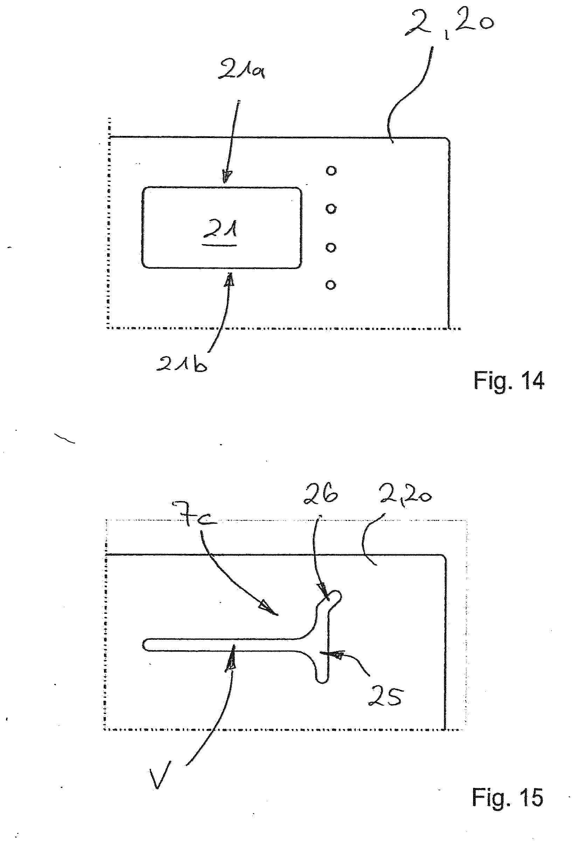

Fig. 14 verdeutlicht die Ausgestaltung einer Durchgangsöffnung 21 anhand eines Detailausschnitts eines Abschirmelements 2 oder eines Stützelements 20 in einer Draufsicht. Erkennbar weist die Durchgangsöffnung 21 eine rechteckige Kontur auf, deren kürzere Erstreckung durch zwei parallel zueinander verlaufende Führungsränder 21a, 21b begrenzt ist. Wie bereits zuvor erläutert, sind diese Führungsränder 21a, 21b dazu ausgebildet, um entlang deren Erstreckung ein Kopplungsmittel 4d eines Verbinders 3e zumindest abschnittsweise linear verschieblich zu führen. Dabei sind die Führungsränder 21a, 21b von jeweils einem der beiden Einschnitte 8 eines Kopplungsmittels 4d umgriffen, wie in Fig. 10 und Fig. 11 ersichtlich.

Fig. 15 zeigt die Ausgestaltung eines Kopplungsmittels 7c anhand eines Detailausschnitts eines Abschirmelements 2 oder eines Stützelements 20 in einer Draufsicht. Ersichtlich weist das Kopplungsmittel 7c einen sich in dessen Längsrichtung erstreckende schlitzförmige Verlängerung V auf, an deren einem Ende eine quer zu dieser verlaufende Schlitzöffnung 25 angeordnet ist. An einem Ende der Schlitzöffnung 25 ist zudem ein schräg zu dieser verlaufender Erweiterungsschlitz 26 gelegen.

Die schlitzförmige Verlängerung V und die Schlitzöffnung 25 gehen so ineinander über, dass sich im Wesentlichen eine T-Form ergibt, welche durch den Erweiterungsschlitz 26 ergänzt wird. Diese Formgebung gestattet es, den Verbinder 3e zunächst mit seiner gesamten Breite durch die schlitzförmige Verlängerung V hindurchzuführen, bis die Einschnitte 8 beziehungsweise die Steckzone 9 eines Kopplungsmittels 4d des Verbinders 3e in Ebene des Abschirmelements 2 oder Stützelements 20 liegen. Anschließend kann der Verbinder 3e so weit in Richtung der Schlitzöffnung 25 und deren Erweiterungsschlitz 26 verschoben werden, bis einer der Einschnitte 8 den den Erweiterungsschlitz 26 begrenzenden Rand teilweise umgreift und die Steckzone 9 vollständig in dem Erweiterungsschlitz 26 und einem Teil der Schlitzöffnung 25 angeordnet ist. Durch eine in entgegengesetzte Richtung erfolgende Verschiebung gelangt die Steckzone 9 abschließend aus dem Erweiterungsschlitz 26 heraus und vollständig in die Schlitzöffnung 25, so dass die beiden Einschnitte 8 des Kopplungsmittels 4d jeweils einen der die Enden der Schlitzöffnung 25 begrenzenden Ränder des Abschirmelements 2 oder des Stützelements 20 umgreifen. Hierdurch ist der Verbinder 3e in einer senkrecht zum Abschirmelement 2 oder Stützelement 20 erfolgenden Richtung unverschieblich gehalten, während dessen oberhalb und unterhalb des Abschirmelements 2 oder des Stützelements 20 gelegenen Abschnitte A frei schwenkbar sind.

Grundsätzlich können die Abschirmelemente 2 und/oder die Stützelemente 20 aus einem Metall gebildet sein. Alternativ oder ergänzend hierzu können die Verbinder 3a-3e aus einem Kunststoff gebildet sein oder einen solchen aufweisen. Bei dem Kunststoff kann es sich beispielsweise um Polyamid oder um Polypropylen oder um Polypropylen-Copolymer oder um Polyethylen handeln. Bevorzugt können die Stützelemente 20 aus einem Kunststoff, insbesondere aus PVC, gebildet sind oder einen solchen aufweisen.

## Patentansprüche

1. Schutzabdeckung (1a-1c) für eine Maschine, umfassend eine Vielzahl an, insbesondere im Querschnitt jeweils L-förmi-gen, Abschirmelementen (2) sowie diese relativ zueinander beweglich miteinander verkettende Verbinder (3a-3c), an denen jeweils wenigstens ein Kopplungsmittel (4a, 4b) ausgebildet ist, wobei die Abschirmelemente (2) jeweils einen ersten Schenkel (S1) und einen gegenüber ihrem ersten Schenkel (S1) abgewinkelten zweiten Schenkel (S2) aufweisen, von denen die ersten Schenkel (S1) jeweils zweier unmittelbar zueinander benachbarter Abschirmelemente (2) so mit ihren jeweiligen Deckflächen einander gegenüberliegend angeordnet sind, dass sich die zweiten Schenkel (S2) der Abschirmelemente (2) zumindest teilweise unter Ausbildung einer längenveränderlichen Abschirmfläche (F) überdecken, **gekennzeichnet durch**
eine Ausbildung jedes Verbinders (3a-3c) als jeweils separates Bauteil, von denen wenigstens ein Verbinder (3a-3c) **durch** sein/e Kopplungsmittel (4a, 4b) entweder mit mindestens einem anderen Verbinder (3a-3c) oder mit mindestens einem der Abschirmelemente (2), insbesondere mit dessen/deren ersten Schenkel/n (S1), gekoppelt ist, wobei jeder Verbinder (3a-3c) wenigstens zwei oder nur zwei bewegliche Arme (5a-5h; 5i, 5j) besitzt, welche an einem diese mitein-ander verbindenden Mittelsteg (6a, 6b) derart, insbesondere nebeneinander, angelenkt sind, dass die Arme (5a-5h; 5i, 5j) eines Verbinders (3a-3c) jeweils innerhalb einer eigenen Schwenkebene, insbesondere relativ zum Mittelsteg (6a, 6b), schwenkbar sind.

2. Schutzabdeckung (1d-1f) für eine Maschine, umfassend eine Vielzahl an Stützelementen (20) oder, insbesondere im Querschnitt jeweils L-förmigen, Abschirmelementen (2) sowie diese relativ zueinander beweglich miteinander verkettende Verbinder (3d, 3e), an denen jeweils mehrere Kopplungsmittel (4c, 4d) ausgebildet sind, **gekennzeichnet durch**
eine Aufteilung jedes Verbinders (3d, 3e) **durch** an diesem, insbesondere parallel zueinander, angeordnete Biegelinien (B) in einzelne Abschnitte (A), von denen jeweils zwei unmittelbar aufeinanderfolgende Abschnitte (A) entlang der diese voneinander abgrenzenden Biegelinie (B) gegeneinander schwenkbar sind, wobei die Kopplungsmittel (4c, 4d) jedes Verbinders (3d, 3e) entweder jeweils zwischen zwei seiner Biegelinien (B) oder jeweils im Bereich, insbesondere in Verlängerung, seiner Biegelinien (B) gelegen sind derart, dass die Stützelemente (20) oder Abschirmelemente (2) jeweils mit einem Kopplungsmittel (4c, 4d) jedes Verbinders (3d, 3e) im Eingriff stehen.

3. Schutzabdeckung (1-1c) nach einem der Ansprüche 1 oder 2,
**dadurch gekennzeichnet,**
**dass** das Kopplungsmittel (4a) wenigstens eines Arms (5a, 5d, 5e, 5g, 5i, 5j) eines Verbinders (3a-3c) zwei, insbesondere in einer gemeinsamen Ebene gelegene, Einschnitte (8) umfasst, von denen jeder Einschnitt (8) sich unter Ausbildung einer zwischen diesen gelegenen Steckzone (9) sowie eines endseitigen Steckabschnitts (10) bis zu einer von zwei sich gegenüberliegenden Kanten (K1, K2) des Arms (5a, 5d, 5e, 5g, 5i, 5j) erstreckt.

4. Schutzabdeckung (1a, 1b) nach einem der Ansprüche 1 oder 3,
**dadurch gekennzeichnet,**
**dass** wenigstens einer der Verbinder (3a, 3b) über seinen Mittelsteg (6a) mit einem Abschirmelement (2), insbesondere mit dessen ersten Schenkel (S1), verbunden ist.

5. Schutzabdeckung (1a) nach Anspruch 4,
**dadurch gekennzeichnet,**
**dass** an dem Mittelsteg (6a) eines, insbesondere des, Verbinders (3a) wenigstens eine Lasche (L) angeordnet oder ausgebildet ist und an wenigstens einem Abschirmelement (2), insbesondere an dessen ersten Schenkel (S1), mindestens ein Befestigungsabschnitt (11) angeordnet oder ausgebildet ist, wobei zur Befestigung des Verbinders (3a) an dem Abschirmelement (2) die Lasche (L) seines Mittelstegs (6a) den Befestigungsabschnitt (11) des Abschirmelements (2) zumindest bereichsweise umgreift und ein freier Endabschnitt (L1) der Lasche (L) wenigstens teilweise innerhalb eines am Mittelsteg (6a) des Verbinders (3a) angeordneten oder ausgebildeten Steckschlitzes (12) eingesteckt ist.

6. Schutzabdeckung (1a) nach Anspruch 5,
**dadurch gekennzeichnet,**
**dass** der Befestigungsabschnitt (11) des Abschirmelements (2) zumindest bereichsweise zwischen wenigstens einem Teil der Lasche (L) und einem im Bereich der Lasche (L) gelegenen Teil des Verbinders (3a) eingegliedert ist.

7. Schutzabdeckung (1a) nach Anspruch 5 oder 6,
**dadurch gekennzeichnet,**
**dass** der freie Endabschnitt (L1) der Lasche (L) des Verbinders (3a) einen Steckkopf (13) mit wenigstens einer Hinterschneidung (H) besitzt, welche zumindest teilweise hinter einen den Steckschlitz (12) des Verbinders (3a) begrenzenden Rand greift.

8. Schutzabdeckung (1a, 1b) nach einem der Ansprüche 1 oder 3 bis 15,
**dadurch gekennzeichnet,**
**dass** wenigstens einer der Verbinder (3a, 3b) mehr als zwei, insbesondere acht, Arme (5a-5h) besitzt.

9. Schutzabdeckung (1a, 1b) nach einem der Ansprüche 1 oder 3 bis 8,
**gekennzeichnet durch**
eine in Bezug auf eine Auszugsrichtung (X) der Schutzabdeckung (1a, 1b) relative Anordnung wenigstens zweier Arme (5a-5h) eines Verbinders (3a, 3b) zueinander derart, dass deren Schwenkebenen einen Winkel von 90° zwischen sich einschließen.

10. Schutzabdeckung (1a, 1b) nach Anspruch 8 oder 9,
**dadurch gekennzeichnet,**
**dass** jeweils zwei, insbesondere parallele Schwenkebenen aufweisende, Arme (5a-5h) eines Verbinders (3a, 3b) paarweise an dem Mittelsteg (6a) angeordnet sind.

11. Schutzabdeckung (1e, 1f) nach Anspruch 2,
**dadurch gekennzeichnet,**
**dass** jeder sich zwischen zwei Biegelinien (B) erstreckende Abschnitt (A) eines Verbinders (3e) über das im Bereich der einen Biegelinie (B) gelegene Kopplungsmittel (4d) unverschieblich und über das im Bereich der anderen Biegelinie (B) gelegene Kopplungsmittel (4d) linear verschieblich an zwei unmittelbar zueinander benachbarten Stützelementen (20) oder Abschirmelementen (2) gelagert ist.

12. Schutzabdeckung (1e, 1f) nach Anspruch 11,
**dadurch gekennzeichnet,**
**dass** die in Bezug auf eine, insbesondere die, Auszugsrichtung (X) der Schutzabdeckung (1e, 1f) unmittelbar aufeinanderfolgenden Stützelemente (20) oder Abschirmelemente (2) abwechselnd jeweils entweder mindestens eine Durchgangsöffnung (21) oder mindestens ein Kopplungsmittel (7c) aufweisen, wobei die Abschnitte (A) eines Verbinders (3e) jeweils über das im Bereich der einen Biegelinie (B) gelegene Kopplungsmittel (4d) unverschieblich mit dem Kopplungsmittel (7c) eines Stützelements (20) oder eines Abschirmelements (2) im Eingriff stehen und über das im Bereich der anderen Biegelinie (B) gelegene Kopplungsmittel (4d) linear verschieblich mit der Durchgangsöffnung (21) eines unmittelbar benachbarten Stützelements (20) oder eines unmittelbar benachbarten Abschirmelements (2) im Eingriff stehen.

13. Schutzabdeckung (1e, 1f) nach Anspruch 12,
**dadurch gekennzeichnet,**
**dass** die Durchgangsöffnungen (21) der Stützelemente (20) oder der Abschirmelemente (2) jeweils zwei diese begrenzende, insbesondere parallel zueinander verlaufende, Führungsränder (21a, 21b) besitzen, entlang denen ein Kopplungsmittel (4d) eines Verbinders (3e) zumindest abschnittsweise linear verschieblich geführt ist.

14. Schutzabdeckung (1d-1f) nach einem der Ansprüche 2 oder 11 bis 13,
**dadurch gekennzeichnet,**
**dass** das Kopplungsmittel (4c, 4d) wenigstens eines Verbinders (3d, 3e) zwei, insbesondere in einer gemeinsamen Ebene gelegene, Einschnitte (8) umfasst, von denen jeder Einschnitt (8) sich unter Ausbildung einer zwischen diesen gelegenen Steckzone (9) bis zu einer von zwei sich gegenüberliegenden Rändern (K1, K2) des Verbinders (3d, 3e) erstreckt.

15. Schutzabdeckung (1d) nach einem der Ansprüche 12 bis 14,
**gekennzeichnet durch**
einen an wenigstens einem Kopplungsmittel (7b) eines Stützelements (20) oder eines Abschirmelements (2) gelegene und mit dem Querschnitt eines Verbinders (3d) korrespondierenden Öffnungsschlitz (22), welcher **durch** zwei an jeweils einer seiner beiden Längskanten (22a, 22b) ausgebildete und zueinander versetzt angeordneten dreiecksförmige Einkerbungen (23a, 23b) teilweise verbreitert ist derart, dass eine, insbesondere die, Steckzone (9) eines Kopplungsmittels (4c) eines Verbinders (3d) **durch** den Öffnungsschlitz (22) hindurch anordenbar ist, wobei **durch** eine wenigstens abschnittsweise Drehung von 45° bis 90°, insbesondere 45°, dieses Verbinders (3d) jeweils ein Teil der Steckzone (9) seines Kopplungsmittels (4c) zumindest bereichsweise in einer der beiden dreiecksförmige Einkerbungen (23a, 23b) angeordnet oder anordenbar ist, während wenigstens eine **durch**, insbesondere die, Einschnitte (8) eines Kopplungsmittels (4c) dieses Verbinders (3d) gebildete Hinterschneidung (H) zumindest teilweise hinter einen eine dreiecksförmige Einkerbung (23a, 23b) des Kopplungsmittels (7b) des Stützelements (20) oder des Abschirmelements (2) begrenzenden Rand greift.
